# EUROPÄISCHE PATENTSCHRIFT

(11) **EP 0 302 427 B1**
(45) Veröffentlichungstag und Bekanntmachung des Hinweises auf die Patenterteilung: **05.01.1994**
(21) Anmeldenummer: 88112419.2
(22) Anmeldetag: 30.07.1988
(51) Int. Cl.: B60N 2/10, B60N 2/22

(54) **Sitz für öffentliche Verkehrsmittel**
Seat for public transport vehicles
Siège pour véhicules de transport en commun

(30) Priorität: 07.08.1987 DE 3726417
(43) Veröffentlichungstag der Anmeldung: 08.02.1989
(73) Patentinhaber: Paulisch KG, D-97816 Lohr (DE)
(72) Erfinder: Mankiewicz, Dieter, D-8700 Lohr/M. (DE)
(74) Vertreter: Eyer, Eckhardt Philipp, Dipl.-Ing.

(56) Entgegenhaltungen:
- DE-A- 3 401 469
- DE-A- 3 538 595
- DE-U- 8 613 612

## Beschreibung

Die Erfindung geht aus von einem Sitz für öffentliche Verkehrsmittel gemäß dem Oberbegriff des Patentanspruches 1.

Sitze dieser Art sind - beispielsweise aus der DE-A-3 538 595 - in verschiedenen Ausführungsformen bekannt. Sie haben sich funktionell im wesentlichen gut bewährt, es wird jedoch in jüngerer Zeit als nachteilig angesehen, daß aufgrund der starren Verbindung zwischen Sitzteil und Rücken der Benutzer dazu neigt, in der Liegelage des Sitzes den Körper über die Form des Sitzes hinweg zu strecken, so daß das Gesäß aus dem Bereich des Sitzwinkels gelangt. Diese Lage ist einerseits für den Benutzer unbequem und andererseits instabil, so daß er - etwa bei Bremsvorgängen - dem Gefühl unterliegt, nicht über einen ausreichend festen Halt zu verfügen.

Dasselbe gilt für die ebenfalls bekannten Sitze mit abklappbarem Rücken, bei denen der Polsterrahmen zweiteilig aus einem Sitzteil und einem Rücken besteht, die jeder für sich eine im wesentlichen gestreckte Form besitzen und in an sich bekannter Weise gelenkig miteinander verbunden sind. Die Umstellung in die Liegelage erfolgt bei diesen bekannten Sitzen in der Weise, daß das Sitzteil in geradlinigen Führungen nach vorne verschoben und anschließend oder gleichzeitig der Rücken in seiner Gesamtheit gegen das Sitzteil verschwenkt wird. Bei diesen Sitzen erfolgt - mit im wesentlichen denselben Nachteilen wie bei der vorstehend beschriebenen Ausführung eines Sitzes - die Körperstreckung selbsttätig aufgrund der Sitzkonstruktion.

Der vorliegenden Erfindung liegt daher als Aufgabe die Schaffung eines Fahrzeugsitzes der beschriebenen Art zugrunde, bei dem beim Abschwenken in die Liegelage einerseits die feste Sitzlage und das Gefühl, einen festen Halt zu besitzen, beim Benutzer erhalten bleibt, er jedoch andererseits in seinem Bestreben, in eine gestreckte Lage zu kommen, unterstützt wird. Diese Aufgabe wird durch einen Sitz mit den Merkmalen des Patentanspruches 1 gelöst.

Durch die Erfindung ist ein Sitz geschaffen, mit dessen Hilfe durch in Abhängigkeit von der Verschenkung des Sitzes geringfügiges zusätzliches Abschwenken des Rückens den Bedürfnissen des Benutzers beim Umstellen des Sitzes in seine Liegelage optimal Rechnung getragen wird. Durch das zusätzliche geringe Abschwenken des Rückens wird das Streckungsbedürfnis des Benutzers unterstützt, wobei das Gesäß und die Oberschenkel in fester Auflage auf dem Sitzteil des Sitzes verbleiben. Der Benutzer behält somit seinen festen Halt in dem Sitz, in dem er sich bei Bremsvorgängen fest abstützt.

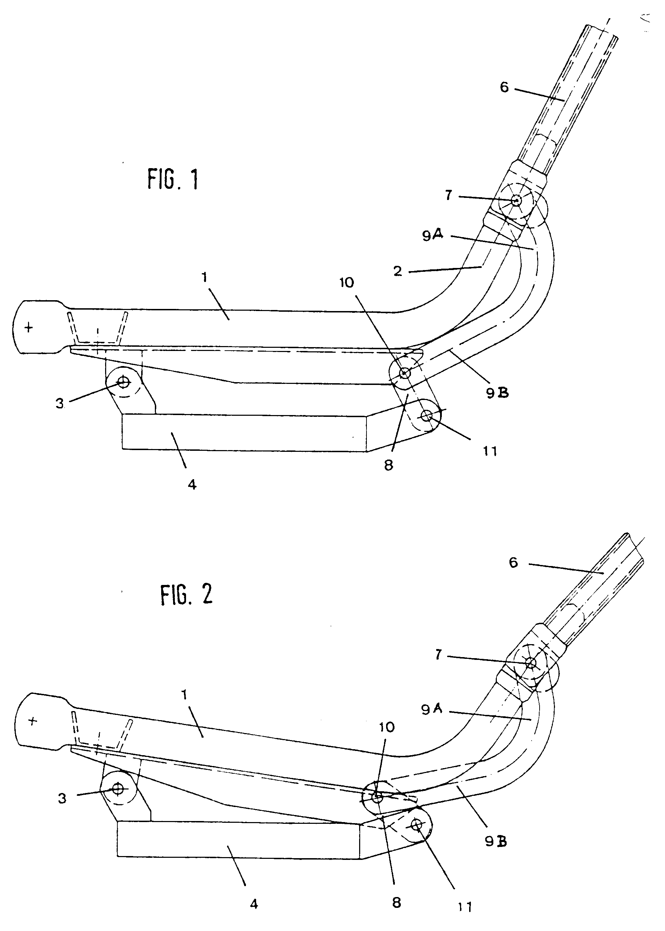

Weitere Ausführungsformen und Vorteile ergeben sich aus der nachstehenden Beschreibung, in der die Erfindung anhand der beiliegenden Zeichnung beispielsweise erläutert ist. Es zeigen
- Fig. 1: die Seitenansicht eines Sitzes in seiner aufrechten Sitzlage
- Fig. 2: den in Fig. 1 wiedergegebenen Sitz in seiner Liegelage
- Fig. 3: eine andere Ausführungsform eines Sitzes in seiner aufrechten Sitzlage
- Fig. 4: eine Variante des in Fig. 3 wiedergegebenen Sitzes in seiner aufrechten Sitzlage
- Fig. 5: den in Fig. 4 wiedergegebenen Sitz in seiner Liegelage
Der in den Fig. 1 und 2 der Zeichnung wiedergegebene Sitz für öffentliche Verkehrsmittel besteht aus einem Sitzteil 1, 2 und einem Rücken 6, die gemeinsam den Polsterrahmen bilden, der um eine sich etwa in Höhe eines Drittels von der Vorderkante des Sitzteils quer erstreckende Achse 3 schwenkbar an einem Sitzgestell 4 befestigt und beispielsweise mittels einer am Polsterrahmen angreifenden Gasfeder (nicht dargestellt) oder in anderer Weise abgestützt ist. In der in Fig. 1 und 2 wiedergegebenen Ausführungsform geht die Sitzfläche (Teil 1) unter Bildung einer Sitzkuhle durch einen sich nach oben krümmenden Zweig (Teil 2) verlängert, so daß der Rücken 6 nicht unmittelbar an der Sitzfläche sondern in einer geringfügig nach oben versetzten Position ansetzt. Der Rücken 6 ist mit dem Sitzteil 1, 2 mittels eines Doppellenkers 8, 9 verbunden, von denen der eine Lenker 9 starr am Rücken 6 befestigt und der andere Lenker 8 am festen Lenker 9 einerseits und am Sitzgestell 4 andererseits angelenkt ist, wobei der Gelenkpunkt 10 zwischen den Lenkern 8, 9 in der Sitzlage des Sitzes geringfügig in Richtung auf die Sitzvorderkante vor dem Anlenkpunkt 11 des Doppellenkers 8, 9 an dem Sitzgestell 4 liegt.

Der die beiden Lenker 8, 9 verbindende Gelenkpunkt 10 liegt in der Sitzlage des Sitzes geringfügig vor - gesehen in Richtung auf die Sitzvorderkante - dem Anlenkpunkt 11. Der auf der Seite des Rückens 6 gelegene Lenker 9 ist an dem Rücken 6 im Bereich der gemeinsamen Achse 7 mit dem Sitzteil 1, 2 des Polsterrahmens starr befestigt. Hierbei weist der Lenker 8 eine geringere Länge als der Lenker 9 auf, der die Form eines gekrümmten Winkelstückes mit einem kurzen, gegen das Rücken weisenden Schenkel 9A und einem längeren Schenkel 9B besitzt.

Beim Verschwenken des Sitzes aus seiner Sitzlage in seine Liegelage wird der Sitz 1, 2 um das Gelenk 3 aus seiner in Fig. 1 wiedergegebenen im wesentlichen horizontalen Lage in seine in Fig. 2 wiedergegebene Abschwenkstellung gebracht. Hierbei verkürzt sich der Abstand zwischen den Gelenkpunkten 7 und 11 mit der Folge, daß der Lenker 9 von dem Lenker 8 aufgrund der vor dem Gelenkpunkt 11 eingerichteten Lage des Gelenkpunktes 10 nach vorn gedrückt wird. Gleichzeitig tritt aufgrund der Abschwenkbewegung des Sitzes eine relative gegenseitige Verstellung des Gelenkpunktes 10 in Richtung auf den Sitz zu ein, die - bezogen auf das Gelenk 7 - einer Verdrehung entspricht. Hierdurch wird aufgrund der festen Verbindung des Lenkers 9 mit dem Rücken 6 im Bereich dieses Gelenkpunkts die erwünschte (bezogen auf den Abschwenkwinkel des Sitzes 1) Abschwenkung des Rückens 6 bewirkt um einen kleinen - mehr als "Auffächern" zu bezeichnenden - Ausschlagwinkel.

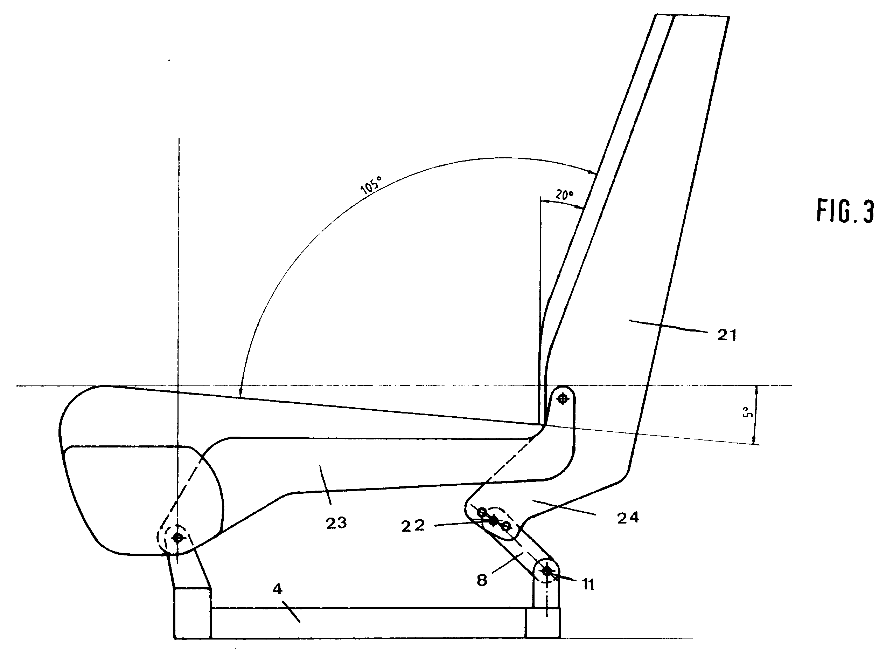

Die in Fig. 3 wiedergegebene - konstruktiv vereinfachte - Ausführungsform eines Sitzes entspricht der in den Fig. 1 und 2 dargestellten Version mit dem einzigen Unterschied, daß der auf der Seite des Rückens 21 gelegene Lenker 24 von einer materialschlüssig mit dem Rücken 21 verbundenen und über seinen Gelenkpunkt 22 mit dem Sitzteil 23 hinausragenden Verlängerung gebildet ist. Auch in diesem Falle ist der auf der Seite des Sitzgestells 4 angeordnete Lenker 8 an einem Anlenkpunkt 11 im hinteren Bereich des Sitzes am Sitzgestell 4 angelenkt und der die beiden Lenker 8, 24 verbindende Gelenkpunkt 22 in der Sitzlage des Sitzes geringfügig vor den Anlenkpunkt 11 verlegt. Hierbei ist im dargestellten Beispiel der Gelenkpunkt der beiden Lenker 8, 24 stufenweise mittels einer in den Lenker eingebrachten Reihe von Bohrungen verstellbar, wodurch eine Einstellung unterschiedlicher Auffächerungswinkel oder gegebenenfalls auch spätere Veränderung des Auffächerungswinkels möglich wird.

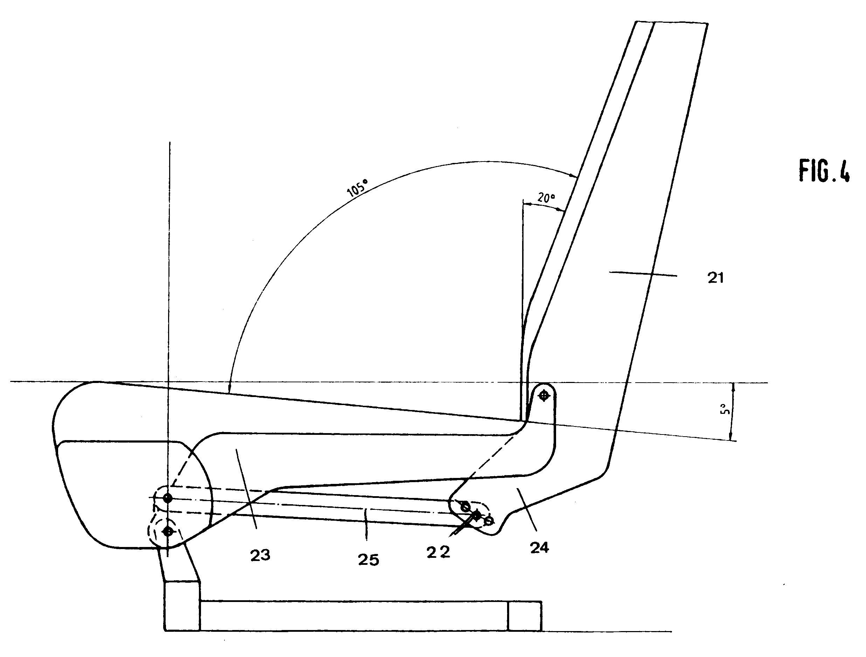

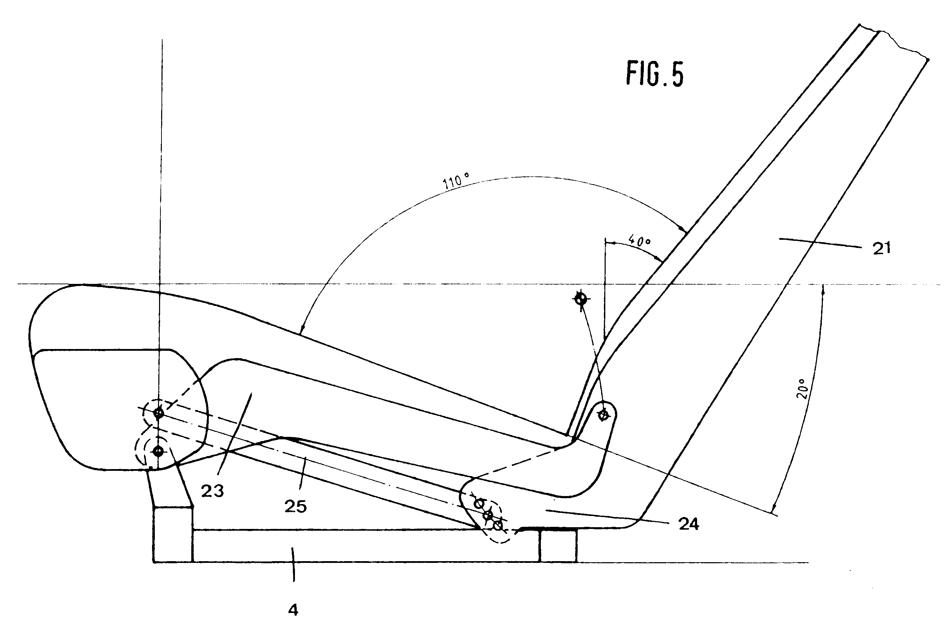

Bei der in den Fig. 4 und 5 wiedergegebenen Ausführungsform ist der auf der Seite des Sitzgestells gelegene Lenker 25 mit seinem freien Ende derart im vorderen Sitzbereich an einem gestellfesten Lagerbock angelenkt, daß der Lenker 25 einen sich von dem Sitzrahmen 1, 2 unterscheidenden Schwenkkreis besitzt. Es wird auf diese Weise beim Abschwenken des Sitzes in seine Liegelage ebenfalls eine Auffächerung des Rückens erreicht und darüberhinaus der Vorteil einer - abgesehen von der unerläßlichen Unterstützung durch beispielsweise eine Gasfeder - nahezu vollständigen Bodenfreiheit im hinteren Sitzbereich erzielt, der hierdurch - etwa für Reinigungszwecke - leicht zugänglich ist und dem den dahinter liegenden Sitz benutzenden Fahrgast eine größere Beinfreiheit bzw. Nutzungsfreiheit eröffnet. Das die beiden Lenker 24, 25; 8, 9 verbindende Gelenk kann als stufenweise oder stufenlos verstellbares Gelenk ausgebildet sein.

## Patentansprüche

1. Sitz für öffentliche Verkehrsmittel mit einem aus einem Sitzteil (1, 2) und einem gelenkig (7) mit diesem verbundenen Rücken (6) gebildeten Polsterrahmen, der um eine sich etwa in Höhe eines Drittels von der Vorderkante des Sitzteils quer erstreckende Achse (3) schwenkbar an einem Sitzgestell (4) befestigt ist, dadurch gekennzeichnet, daß der Rücken (6) mit dem Sitzteil (1, 2) des Polsterrahmens mittels eines Doppellenkers (8, 9) verbunden ist, von denen der eine Lenker (9) starr am Rücken (6) befestigt und der andere Lenker (8) am festen Lenker (9) einerseits und am Sitzgestell (4) andererseits angelenkt ist, wobei der Gelenkpunkt (10) zwischen den Lenkern (8, 9) in der Sitzlage des Sitzes geringfügig in Richtung auf die Sitzvorderkante vor dem Anlenkpunkt (11) des Doppellenkers (8, 9) an dem Sitzgestell (4) liegt.

2. Sitz für öffentliche Verkehrsmittel nach Anspruch 2, dadurch gekennzeichnet, daß der Doppellenker (8, 9) an dem Rücken (6) im Bereich der gemeinsamen Achse (7) mit dem unteren Teil (1, 2) des Polsterrahmens (1, 2) befestigt ist.

3. Sitz für öffentliche Verkehrsmittel nach Anspruch 1 oder 2, dadurch gekennzeichnet, daß der auf der Seite des Sitzrahmens gelegene Lenker (8) eine geringere Länge als der auf der Seite des Schulterteils gelegene Lenker (9) besitzt, der die Form eines gekrümmten Winkelstückes mit einem kurzen, gegen den Rücken (6) weisenden Schenkel (9A) und einem langen Schenkel (9B) aufweist.

4. Sitz für öffentliche Verkehrsmittel nach einem der Ansprüche 1 bis 3, dadurch gekennzeichnet, daß der auf der Seite des Rückens (21) gelegene Lenker (24) von einer einstückig mit dem Rücken (21) verbundenen und über seinen Gelenkpunkt (22) mit dem Sitzteil (23) hinausragenden Verlängerung gebildet ist.

5. Sitz für öffentliche Verkehrsmittel nach einem der Ansprüche 1 oder 2, dadurch gekennzeichnet, daß der auf der Seite des Sitzgestells (4) gelegene Lenker (25) mit seinem freien Ende an einem gestellfesten Lagerbock im vorderen Sitzbereich derart angelenkt ist, daß der Lenker (25) und der Sitzrahmen (1, 2) einen unterschiedlichen Schwenkkreis aufweisen.

6. Sitz für öffentliche Verkehrsmittel nach einem der Ansprüche 1 bis 5, dadurch gekennzeichnet, daß die beiden Lenker (24, 25; 8, 9) mittels eines stufenweise oder stufenlos verstellbaren Gelenkes miteinander verbunden sind.

## Claims

1. Seat for public transport vehicles, having an upholstered frame, which is formed from a seat portion (1, 2) and a back (6), which is pivotally connected thereto (7), said frame being mounted on a seat support (4) so as to be pivotable about an axis (3) extending perpendicularly substantially on a level with one-third of the front edge of the seat portion, characterised in that the back (6) is connected to the seat portion (1, 2) of the upholstered frame by means of a double connecting rod (8, 9), of which one connecting rod (9) is rigidly mounted on the back (6), and the other connecting rod (8) is pivotally mounted on the fixed connecting rod (9), at one end, and on the seat support (4), at the other end, the pivot point (10) between the connecting rods (8, 9) lying in the seating position of the seat slightly towards the front edge of the seat in front of the pivot point (11) of the double connecting rod (8, 9) on the seat support (4).

2. Seat for public transport vehicles according to claim 1, characterised in that the double connecting rod (8, 9) is mounted on the back (6) in the region of the common axis (7) with the lower portion (1, 2) of the upholstered frame (1, 2).

3. Seat for public transport vehicles according to claim 1 or 2, characterised in that the connecting rod (8), situated on the side of the seat frame, has a shorter length than the connecting rod (9) which is situated on the side of the shoulder portion and has the configuration of a bent angle-piece having a short arm (9A), which is orientated towards the back (6), and a long arm (9B).

4. Seat for public transport vehicles according to one of claims 1 to 3, characterised in that the connecting rod (24), which is situated on the side of the back (21), is formed by an extension which is integrally connected to the back (21) and protrudes beyond its pivot point (22) with the seat portion (23).

5. Seat for public transport vehicles according to one of claims 1 or 2, characterised in that a connecting rod (25), which is situated on the side of the seat support (4), is pivotally mounted with its free end on a bearing block, integral with the support, in the front seat region in such a manner that the connecting rod (25) and the seat portion (1, 2) have a different pivotal circle.

6. Seat for public transport vehicles according to one of claims 1 to 5, characterised in that the two connecting rods (24, 25; 8, 9) are interconnected by means of a stepwisely or steplessly adjustable pivot joint.

## Revendications

1. Siège pour moyens de transport en commun, comprenant un cadre-support de coussin, qui est formé d'une partie siège (1, 2) et d'un dossier (6) relié à celle-ci de façon articulée (en 7) et qui est fixé a un bâti de siège (4) de manière à pouvoir pivoter autour d'un axe (3) s'étendant transversalement à peu près au niveau d'un tiers à partir du bord antérieur de la partie siège, caractérisé en ce que le dossier (6) est relié à la partie siège (1, 2) du cadre-support de coussin au moyen d'un double bras de liaison (8, 9), dont un bras (9) est fixé rigidement au dossier (6) et dont l'autre bras (8) est articulé d'une part sur le bras fixe (9) et, d'autre part, sur le bâti de siège (4), le point d'articulation (10) entre les bras (8, 9) étant situé, dans la position assise du siège, légèrement en avant du point d'articulation (11) du double bras (8, 9) sur le bâti de siège (4) en direction du bord antérieur du siège.

2. Siège pour moyens de transport en commun selon la revendication 1, caractérisé en ce que le double bras (8, 9) est fixé au dossier (6) au niveau de l'axe commun (7) avec la partie inférieure (1, 2) du cadre-support de coussin (1, 2).

3. Siège pour moyens de transport en commun selon la revendication 1 ou 2, caractérisé en ce que le bras (8) situé du côté du bâti de siège a une plus petite longueur que le bras (9) situé du côté du dossier, lequel présente la forme d'une pièce coudée ayant une branche courte (9A) dirigée vers le dossier (6) et une branche longue (9B).

4. Siège pour moyens de transport en commun selon l'une quelconque des revendications 1 à 3, caractérisé en ce que le bras (24) situé du côté du dossier (21) est formé par un prolongement qui est raccordé d'une seule pièce au dossier (21) et qui dépasse son point d'articulation (22) avec la partie siège (23).

5. Siège pour moyens de transport en commun selon la revendication 1 ou 2, caractérisé en ce que le bras (25) situé du côté du bâti de siège (4) est articulé par son extrémité libre sur un palier solidaire du bâti dans la région avant du siège, de telle sorte que ce bras (25) et le cadre-support de coussin (1, 2) présentent un cercle de pivotement différent.

6. Siège pour moyens de transport en commun selon l'une quelconque des revendications 1 à 5, caractérisé en ce que les deux bras (24, 25; 8, 9) sont raccordés l'un à l'autre au moyen d'une articulation réglable par échelons ou en continu.
